# EUROPEAN PATENT APPLICATION

(11) **EP 4 848 211 A1**
(43) Date of publication of application: **02.12.2026**
(21) Application number: 25305774.9
(22) Date of filing: 28.05.2025
(51) Int. Cl.: G06T 9/00, H04N 19/597, H04N 19/70

(54) **SCENE ENCODING BASED ON CAPTURE CONDITIONS**

(71) Applicant: InterDigital CE Patent Holdings, SAS, 75017 Paris (FR)
(72) Inventor: CHUPEAU, Bertrand, 35700 RENNES (FR); THUDOR, Franck, 35000 RENNES (FR); SANDRI, Gustavo, 35510 CESSON-SEVIGNE (FR); KRIVOKUCA, Maja, 35000 RENNES (FR); SABATER, Neus, 35830 BETTON (FR)
(74) Representative: Interdigital

(57) **Abstract**

The present principles generally relate to the encoding, transmitting, decoding and rendering of point cloud (PC), for example in a 3D frame of reference. The present principles relate to the encoding of Gaussian Splatting model representation of 3D models. Metadata describing the inscription of the rig of cameras used to capture the 3D scene are encoded with the 3D scene.

## Description

### 1. Technical Field

The present principles generally relate to the encoding, transmitting, decoding and rendering of point cloud (PC), for example in a 3D frame of reference. The present principles relate to the encoding of Gaussian Splatting model representation of 3D models. Metadata describing the inscription of the rig of cameras used to capture the 3D scene are encoded with the 3D scene.

### 2. Background

Volumetric representations have been proposed to be used in the context of New View Generation (NVG). This involves the generation of new views from arbitrary viewing angle of a scene when only a limited number of input views has been captured. In particular, 3D Gaussian Splatting (3DGS) has emerged as a new scene representation that is able to render volumetric data from a multi-view capture with high quality. Furthermore, 3DG splatting avoids unnecessary computation in the empty space and achieves real-time rendering. With advencies in Artificial Intelligence (AI) and Graphics Processing Units (GPU), new learning techniques have become popular, creating a paradigm-shift in the realm of 3D scene representation. 3DGS represents a scene as a collection of 3D ellipsoid primitives, each of which is parameterized as a Gaussian function that allows stretching, scaling and rotation by different amounts and in different directions in 3D space. Each 3D Gaussian primitive has color values associated with different viewing directions in the 3D space, as well as an opacity coefficient that controls its transparency.

A 3DGS representation of a 3D scene is generated from a set of views captured from a rig of (real or virtual) cameras. The rendering performance of 3DGS is at the expense of a huge amount of data to represent the 3D scene. A lot of Gaussian primitives are needed for representing a static scene, yielding raw bit rates in Gigabits per second when dynamic sequences are tackled. To compress such an amount of data, a coding-decoding workflow may be used. For example, the 3D scene may be encoded and decoded and views from non-capturing points of view may be generated to compare to similar view from the same points of view before the encoding. So, the encoding parameters may be adapted to reduce the distortion of the views generated from the decoded 3DGS representation. However, the views that the source 3DGS representation is generated from are lost, the quality metrics are computed only relatively to the 3DGS representation, before encoding and after decoding. There is a lack of a system that could take a synthetic representation of the rig of cameras that acquired the views on which the 3DGS representation has been learnt to enhance the encoding and the rendering of a 3D scene or a sequence of 3D scenes.

### 3. Summary

The following presents a simplified summary of the present principles to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

The present principles relate to a method comprising receiving a three-dimensional (3D) Gaussian Splatting (3DGS) model captured from a rig of cameras. An inscription of the rig of cameras used to capture the 3DGS model is also received. This inscription describes the part of the 3D space the rig of cameras is inscribed in. The method also comprises generating views from points of views according to the inscription before and after encoding and setting encoding parameters according to a comparison between the generated view. Then, encoding the 3DGS model according to the encoding parameters and encoding a description of said inscription.

The present principles also relate to a device comprising a processor configured to implement the method above.

### 4. Brief Description of Drawings

The present disclosure will be better understood, and other specific features and advantages will emerge upon reading the following description, the description making reference to the annexed drawings wherein:
- **Figure 1** illustrates a workflow from the capture of a real 3D scene to a virtual rendering with intermediate 3DGS models;
- **Figure 2** illustrates a workflow from the capture of a real 3D scene to a virtual rendering, with intermediate 3DGS models, according to the present principles;
- **Figure 3** shows an example architecture of a device which may be configured to implement methods according to embodiments of the present principles;
- **Figure 4** shows an example of an embodiment of the syntax of a stream when the data are transmitted over a packet-based transmission protocol;
- **Figures 5A to Figure 5E** show examples of template shape of a rig of cameras;
- **Figure 6** illustrates a generic scheme of a capture-informed 3DGS encoder according to the present principles.

### 5. Detailed description of embodiments

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims. While not explicitly described, the present examples and variants may be employed in any combination or sub-combination.

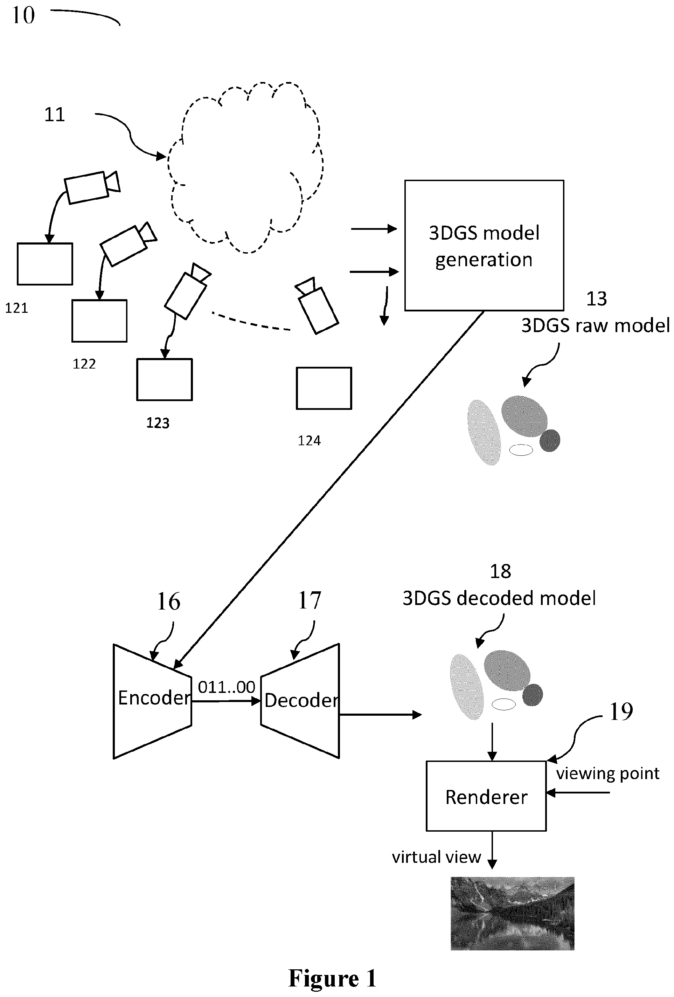

**Figure 1** illustrates a workflow 10 from the capture of a real 3D scene 11 to a virtual rendering 19, with intermediate 3DGS models 13 and 18. In such a scheme encoder 16 is agnostic about input views 121 to 124 used for the 3D scene model generation. That is consistent with a standardization of the compression. A 3DGS encoder 16 takes as input a 3DGS representation 13 in a given format and generates a compressed bitstream, compliant with a standard. So that a standard-compliant decoder 17 can decode it and reconstruct a 3DGS model 18. Thus, the generation of input model 13 is not related to the compression task.

The way the 3D scene modeled by the Gaussian splats can be consumed is limited by the type of 3D scene (object centric, small scale indoor scene, unbounded outdoor scene, etc.) and by the multi-camera rig set-up (2D planar forward facing, 1D circle arc, inward spherical or cylinder, etc.) that captured it. As a result, the 3D space is not entirely sampled by input views used to generate the 3DGS model. So, only a sub-part of the 3D space can be reliably represented by the 3DGS model. According to the present principles, the camera set-up is calibrated at the capture stage. Thus, extrinsic camera parameters (camera poses, that are locations and orientations) and intrinsic camera parameters (camera projection model) are available and can be provided and used by the subsequent stages of the workflow.

According to the present principles, providing the encoder with scene capture information attached to 3DGS content enables the design of compression algorithms with enhanced performance. Additionally, the same information about the scene capture can be translated into viewing space metadata transmitted to the decoder, for example, to constrain the virtual navigation in 3D space with a guaranteed good-quality viewing experience.

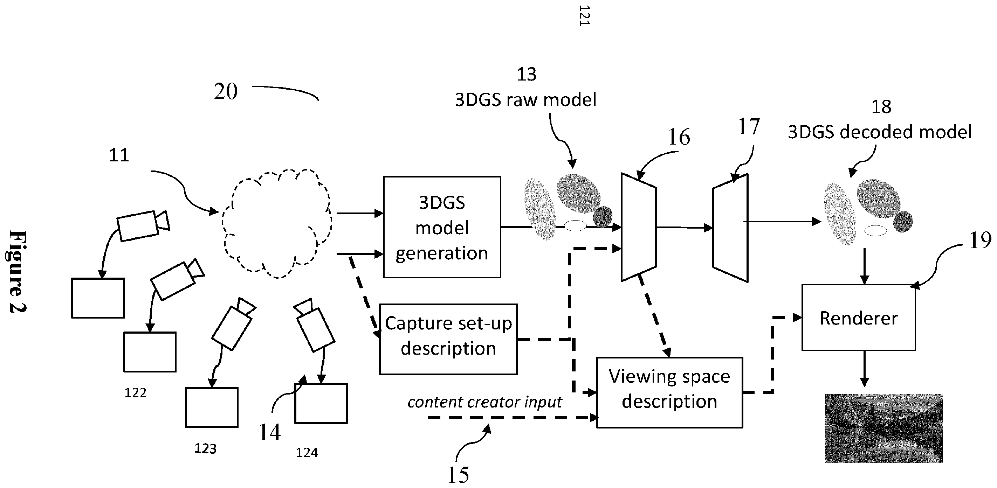

**Figure 2** illustrates a workflow 10 from the capture of a real 3D scene 11 to a virtual rendering 19, with intermediate 3DGS models 13 and 18, according to the present principles. As a 3DGS model is learnt from a given set of cameras, orgazined as a rig, some part of the 3D scene are not captured in the views. Thus, the knowledge of the rig or the king of rig is useful for the encoding and for the navigation, that is the generation of views from points of the 3D space different from the acquisition points of view.

According to the present principles, at a first step the spatial limitations in the capture of the 3D scene due to the image acquisition system is described. The 3D scene was captured by *Nc* cameras. The camera parameters come in two parts: the extrinsic parameters giving the position and the orientation in the 3D space, and the intrinsic parameters that define the 3D-to-2D projection model onto the camera plane. For each of the *Nc* cameras, the extrinsic parameters consist of the camera position, specified by a 3D vector in the 3D coordinate system of the scene and the camera orientation, that is a 3D rotation around the axes of the coordinate system, either specified by three Euler angles or with an alternative 3-dimensional unit quaternion representation. For each of the *Nc* cameras, the intrinsic parameters consist of the size in pixels of the camera projection plane and the camera projection type, with the related specific parameters.

For the perspective projection (i.e. one of the possible projection types), the projection specific parameters are the focal length, that can be different along the horizontal and vertical directions *f*=(*f_hor, f_ver*) and the principal point *p*= (*p_hor, p_ver*) which defines a center of projection in the camera plane. In the following, examples are provided according to this type of camera. The present principles can be applied to different types of cameras like orthographic, equirectangular, or more complex ones, like wide angle cameras, implying optical lens distortions.

In a first embodiment of the present principles, the scene capture metadata consist in an exhaustive list of extrinsic and intrinsic parameters of the *Nc* cameras that captured the scene. In a second embodiment, the scene capture metadata consist in an exhaustive list of extrinsic parameters of the *Nc* cameras that captured the scene plus the intrinsic parameters of a single perspective camera model (common to all *Nc* cameras).

In a third embodiment, a compact representation of the capture of the 3D scene is transmitted capture metadata. In this embodiment, the rig of cameras is described by a template shape, belonging to the (not limiting) examples of 1-D shape, e.g. on a circle arc, 2-D planar shape, 3-D shape, cylinder, and spherical shape; 3D bounding volume by the cameras within sampling unconstrained position and orientations (so a region is defined, such as a rectangle, a parallelepipedon, a sphere, a cylinder, etc., where a virtual camera can be placed for a good rendering quality). The metadata may also be or comprise a combination of some of these data. The metadata may comprise the dimension(s) of the template shape, its orientation (when applicable) and a description of the intrinsic parameters of a camera model (for example a perspective camera model: camera plane dimension and a focal length) that applies to all the cameras.

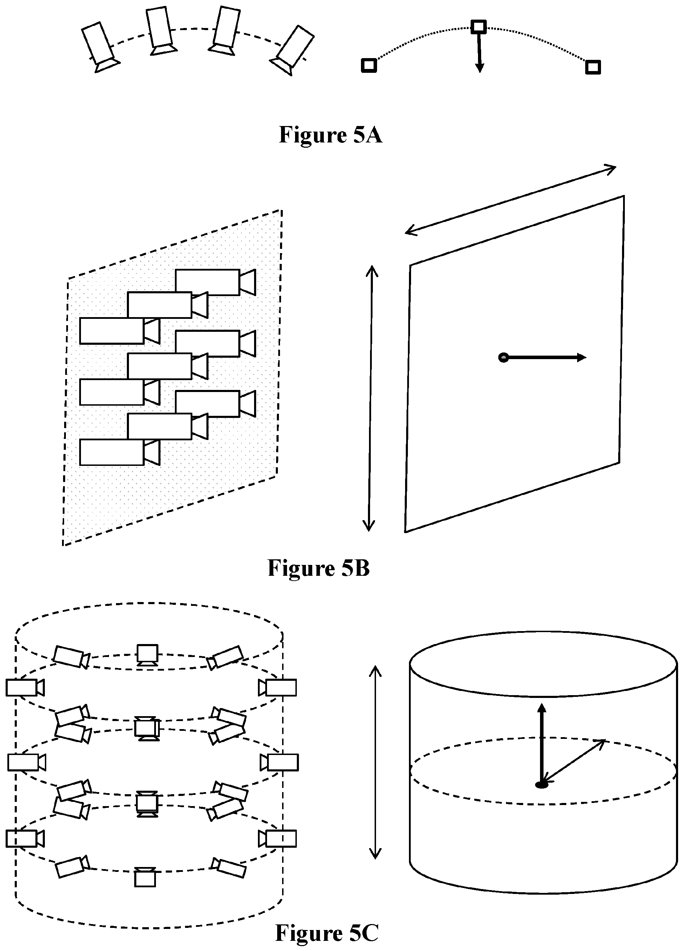

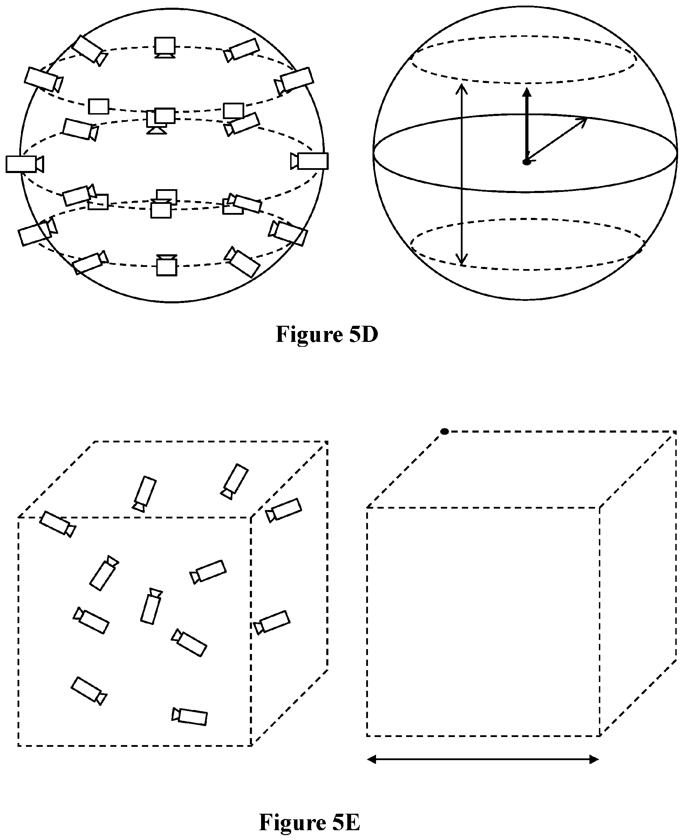

**Figures 5A to Figure 5E** show examples of template shape of a rig of cameras. Figure 5A shows an example of a 1-D path rig, with, at the left hand, exemplary poses (location and orientation) of cameras and, at the right hand, a possible simplified representation of the rig, here, a compact list of control points (for example in a Bezier curve). A simplified representation of a rig is an inscription in the 3D space that can be a path or a volume. Figure 2B shows a rig organized as a planar array of cameras with the corresponding capture rectangle. Figure 5C illustrates a cylinder rig and Figure 5D represents a spherical rig with cameras oriented toward the center of the volume (cylinder / sphere). Figure 5E illustrates a case in which cameras are located and oriented in a disorganized fashion. An example compact layout for this kind of rig can be, for example, a cube. The dimensions of the cube may vary depending on the location and the orientation of the set of cameras.

A possible syntax for the capture-set up information may be the following:

| | |
|---|---|
| capture_setup_information() | Descriptor |
| camera_intrisincs() | |
| **template_shape_ID** | u(3) |
| if (template_shape_ID == 0) { /* 1-D path */ | |
| **num_control_points** | u(16) |
| for(k = 0; k < num_control_points; k++) { | |
| **cp_pos_x**[k] | fl(32) |
| **cp_pos_y**[k] | fl(32) |
| **cp_pos_z**[k] | fl(32) |
| **cp_quat_x**[k] | i(32) |
| **cp_quat_y**[k] | i(32) |
| **cp_quat_z**[k] | i(32) |
| } | |
| } else if (template_shape_ID < 5) { /* shape or bounding volume */ | |
| **pos_x** | fl(32) |
| **pos_y** | fl(32) |
| **pos_z** | fl(32) |
| **quat_x** | i(32) |
| **quat_y** | i(32) |
| **quat_z** | i(32) |
| if (template_shape_ID < 4) { /* shape */ | |
| if (template_shape_ID == 1) { /* planar */ | |
| **plane_width** | fl(32) |
| **plane_height** | fl(32) |
| } else { /* cylindrical or spherical */ | |
| **inward_flag** | u(1) |
| **radius** | fl(32) |
| **height** | fl(32) |
| if (template_shape_ID == 3) /* spherical */ | |
| **truncated_flag** | u(1) |
| } | |
| } else { /* bounding volume */ | |
| **bounding_volume_ID** | u(2) |
| if (bounding_volume_ID < 2) { /* cuboid or spheroid */ | |
| **size_x** | fl(32) |
| **size_y** | fl(32) |
| **size_z** | fl(32) |
| } | |
| } | |
| } | |

With the following semantics:
**template_shape_ID** specifies the type of rig shape (0 for 1-D path, 1 for planar, 2 for cylinder, 3 for spherical, 4 for bounding volume, 5 for undefined). If undefined, the exhaustive list of camera parameters is given.
**bounding_volume_ID** specifies the type of bounding volume (0 cuboid, 1 for spheroid).
**num_control_points** specifies the number of control points to define a 1-dimensional path.
**(cp_pos_x[**k**], cp_pos_y[**k**], cp_pos_z[**k**])** specifies the 3D position of the control point with index k.
**(cp_quat_x[**k**], cp_quat_y[**k**], cp_quat_z[**k**])** specifies the 3D viewing orientation at control point with index k, expressed with unit quaternion.
**(pos_x, pos_y, pos_z)** specifies the 3D position of the template shape (upper left corner for the plane, centre for cylinder and sphere, upper left corner for cuboid).
**(quat_x, quat_y, quat_z)** specifies the 3D orientation of the template shape (normal viewing direction for the plane, vertical orientation for the cylinder or a truncated sphere).
**(plane_width, plane_height)** specifies the horizontal and vertical dimensions of the plane.
**inward_flag** specifies if cameras placed on the cylinder or spherical rigs are inward facing (when equal to 1) or outward facing (when equal to 0).
**radius** specifies the radius of the cylinder or of the sphere.
**height** specifies the height of the cylinder or of the truncated sphere, when **truncated_flag** is equal to true.
**(size_x, size_y, size_z)** specifies the size of the cuboid or spheroid in x, y, z directions.

The metadata are encoded with the 3DGS content. For example, in a PLY format:
ply
   format ascii 1.0
   comment focal 1533 1533
   comment resolution 1920 1080
   comment template_shape_id 1
   comment position 0.006158560514 0.4103583097 -0.2335643917
   comment orientation -1.350587964 0.06522566825 -0.2107127458
   comment size 1.13 0.995
   ...
end_header

At a second step of the present principles, a raw 3DGS model with additional information about the scene capture conditions is inputted in an encoder as depicted in Figure 2. The encoder does not have a direct access to the input views from the capture system from which the 3DGS model has been learned. However, according to the present principles, the encoder has access to metadata describing this conditions according to one of the embodiments described upper. It is therefore possible for the encoder to compare a rendered image, before compression and after compression, at any virtual viewport position, and measure the distortions introduced by the compression with image-based metrics such as PSNR. Such image-based distortion measures can be used to guide the encoder strategy and encoding parameter choices, based on rate-distortion optimization (RDO). In other words, the selecting between different possible encoder parameters is solved by choosing a compromise between compression ratio (rate) and level of distortion in the rendered images, for example, according to an image-based metrics such as PSNR. Such image-based distortion measures can be used to guide the encoder strategy and encoding parameter choices, for example, based on rate-distortion optimization (RDO). So, according to the present principles, encoding parameters are selected by choosing a compromise between compression ratio (rate) and level of distortion in the rendered images.

According to the present principles, the encoder receivces metadata describing the rig of the cameras used to capture the 3D scene and an inscription of this rig in the 3D space. Sample a viewport for RDO out of the inscription in the 3D space of the camera capture positions would be unefficient, as the rendering quality is expected to be low in these conditions. An accurate modeling by the 3DGS representation for parts of the scene that were not well captured in the input images used for the model generation cannot be expected. In another way, having many viewport positions included in the RDO test set may become computationally intractable. A solution proposed according to the present principles is to uniformly sample a predetermined number of viewport positions, within the range of input camera positions and orientations (i.e. the inscription in the 3D space), as provided by the capture set-up metadata. This means that *N_{T}* testing views are generated from virtual cameras uniformly positioned. If template_shape_ID is equal to 0, along the 1-dimensional path. On the planar, cylindrical or spherical shapes if template_shape_ID is equal to 1, 2 or 3. If template_shape_ID is equal to 4, within the bounding volume; and at a subset of real camera positions if template_shape_ID is equal to 5 (undefined).

For any RDO based encoder decision, a Lagrangian optimization may be involved, wherein the distortion D is the average distortion (e.g. PSNR) for the NT pairs of testing and for the compressed images, and wherein the rate R includes all bits associated with the decision, including header, side information and transform data. For all possible parameter vectors p, the aim is to solve the constrained problem according to Formula 1: ${min}_{p} D \left(p\right) s . t . R \left(p\right) \leq {R}_{T}$ where RT is the target bit rate, or to solve the unconstrained Lagrangian formulation according to Formula 2: ${p}_{opt} = {argmin}_{p} \left\{D\left(p\right)+λR\left(p\right)\right\}$ where λ controls the rate-distortion trade-off.

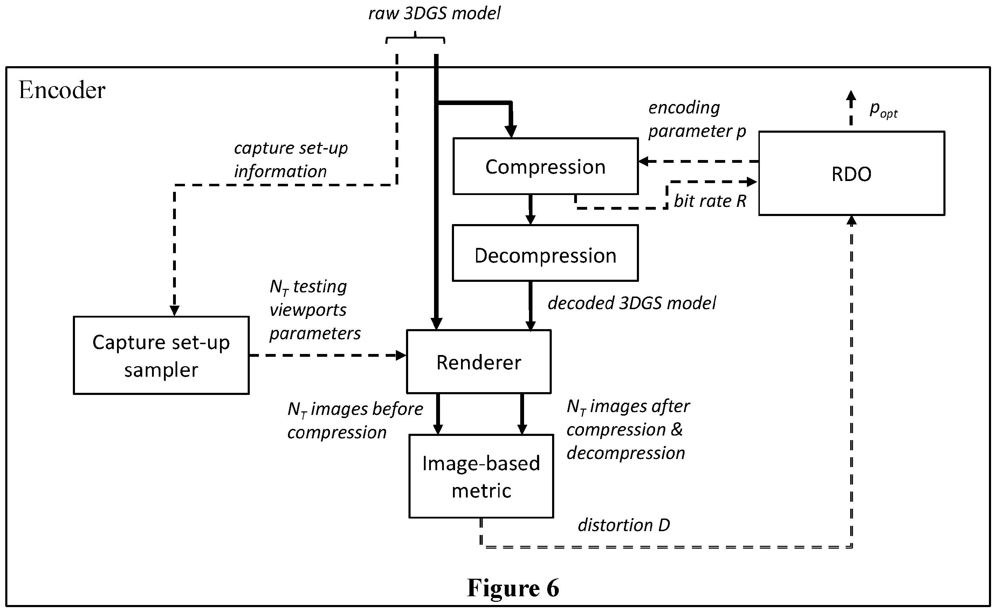

**Figure 6** illustrates a generic scheme of a capture-informed 3DGS encoder according to the present principles. Possible options for the present 3DGS encoder where the above generic RDO technique can be applied are listed below:

Pruning out non-relevant Gaussian primitives, based on various criteria, such as too low an opacity or too small a size. For each such opacity or size criterion, several thresholds can be tested and the optimal one chosen based on the RDO process depicted in Figure 6Figure 6.

Simplifying the shape of Gaussian primitives. For example, the ellipsoid shape of too small Gaussian primitives is simplified into a sphere, and again several size threshold can be tested and the optimal one chosen based on RDO.

Simplifying the viewpoint-dependent color model of Gaussian primitives. For example, clustering the 3DGS model based on Gaussian primitives' positions and testing various combinations with some of the clusters having only the lowest coefficients of spherical harmonics (that is assuming the corresponding scene parts are Lambertian surfaces, with a viewpoint-independent color). The optimal combination of viewpoint dependent / viewpoint independent combination of Gaussian clusters is chosen based on RDO.

Finding the optimal quantization steps for all the 3DGS attributes (spherical harmonics, opacity, scale and rotation).

So, the encoder benefits from some knowledge derived from the camera capture set-up. The navigation application at the client side can also benefit from it after the decoding of the 3DGS model. Constraining the virtual navigation to a sub-part of the global 3D scene, to ensure a good immersive user experience, is indeed of prime importance. Such constraints can be defined at a more abstract level than a compact description of the camera capture set-up by, for example, restricting virtual locations in the global 3D space and viewing directions for the viewer to a "viewing space", for example for a client receiving and decoding a 3DGS model.

According to the present principles, a compact description of camera capture information is detailed, in terms of viewing space restrictions for the consumption of the 3DGS model. For that purpose, three sources of information can be combined: Checking that all allowed viewports (positions and orientations) in the viewing space have a viewing frustum (part of the 3D scene that projects onto the viewport) included in the global viewing frustum of the multi-camera capture set-up. This is directly inferred from the capture set-up description; Checking that allowed viewports have a good enough visual quality (low distortions). This can be checked by the encoder; additional (subjective, artistic) input from the content creator. For example, the content creator could enforce the user to explore some particular sub-part of the 3D scene and not navigate other parts, even if the rendering quality is good, based on some narrative intent.

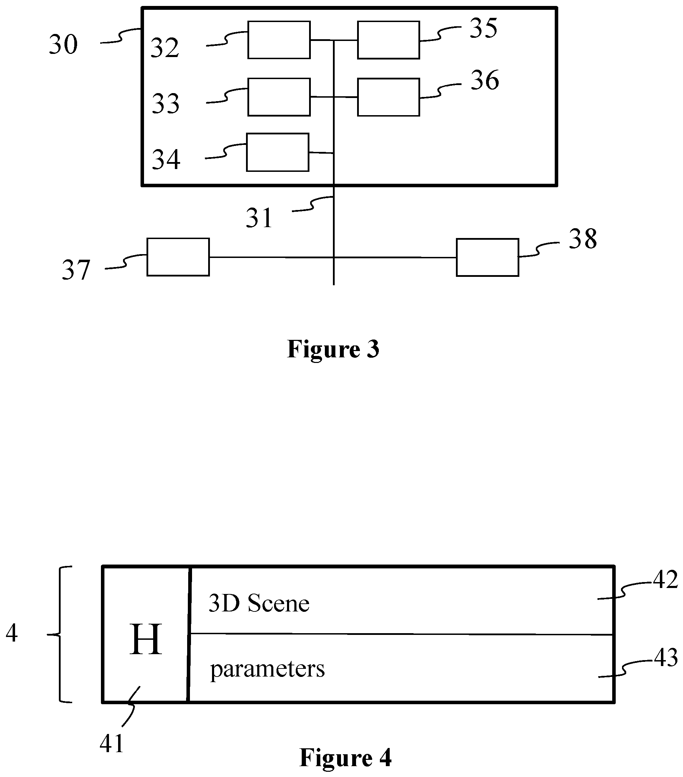

**Figure 3** shows an example architecture of a device 30 which may be configured to implement methods according to embodiments of the present principles. The device is linked with other devices via their bus 31 and/or via I/O interface 36.

Device 30 comprises following elements that are linked together by a data and address bus 31:D
- a processor 32 (or CPU), which is, for example, a DSP (or Digital Signal Processor);
- a ROM (or Read Only Memory) 33;
- a RAM (or Random Access Memory) 34;
- a storage interface 35;
- an I/O interface 36 for reception of data to transmit, from an application; and
- a power supply (not represented in Figure 2), e.g. a battery.

In accordance with an example, the power supply is external to the device. In each of mentioned memory, the word « register » used in the specification may correspond to area of small capacity (some bits) or to very large area (e.g. a whole program or large amount of received or decoded data). The ROM 33 comprises at least a program and parameters. The ROM 33 may store algorithms and instructions to perform techniques in accordance with present principles. When switched on, the CPU 32 uploads the program in the RAM and executes the corresponding instructions.

The RAM 34 comprises, in a register, the program executed by the CPU 32 and uploaded after switch-on of the device 30, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Device 30 is linked, for example via bus 31 to a set of sensors 37 and to a set of rendering devices 38. Sensors 37 may be, for example, cameras, microphones, temperature sensors, Inertial Measurement Units, GPS, hygrometry sensors, IR or UV light sensors or wind sensors. Rendering devices 38 may be, for example, displays, speakers, vibrators, heat, fan, etc.

In accordance with examples, the device 30 is configured to implement a method according to the present principles of encoding, transmitting and decoding 3D scenes encoded as 3DGS models and associated with metadata relative to the capture of the 3D scene, and belongs to a set comprising:
- a mobile device;
- a communication device;
- a game device;
- a tablet (or tablet computer);
- a laptop;
- a still picture camera;
- a video camera.

**Figure 4** shows an example of an embodiment of the syntax of a stream when the data are transmitted over a packet-based transmission protocol. Figure 4 shows an example structure 4 of a stream encoding point clouds according to the present principle. The structure consists of a container which organizes the stream in independent elements of syntax. The structure may comprise a header part 41 which is a set of data common to every syntax element of the stream. For example, the header part comprises some of metadata about syntax elements, describing the nature and the role of each of them. The structure comprises a payload comprising an element of syntax 42 and at least one element of syntax 43 (there may be an element of syntax 43 for each type of attribute data, for instance one for the color, one for the reflectance, one for the normal vectors, etc.). Syntax element 42 comprises data representative of the 3D scene, for example represented as a 3D Gaussian splatting model associated with scene-capture metadata.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method comprising:
- receiving a three-dimensional (3D) Gaussian Splatting (3DGS) model captured from a rig of cameras;
- receiving an inscription of the rig of cameras used to capture the 3DGS model;
- generating views from points of views according to the inscription before and after encoding and setting encoding parameters according to a comparison between the generated views; and
- encoding the 3DGS model according to the encoding parameters and encoding a description of said inscription.

2. The method according to claim 1, wherein the inscription of the rig of cameras comprises a list of intrinsic and extrinsic parameters of each camera of the rig of cameras.

3. The method according to claim 1, wherein the inscription of the rig of cameras comprises a list of extrinsic parameters of each camera of the rig of cameras and intrinsic parameters appliable to every camera.

4. The method according to claim 1, wherein the inscription of the rig of cameras comprises a compact representation of the capture of the 3D scene, the representation comprising a template shape.

5. A device comprising a processor configured for:
- receiving a three-dimensional (3D) Gaussian Splatting (3DGS) model captured from a rig of cameras;
- receiving an inscription of the rig of cameras used to capture the 3DGS;
- generating views from points of views according to the inscription before and after encoding and setting encoding parameters according to a comparison between the generated views; and
- encoding the 3DGS model according to the encoding parameters and encoding a description of said inscription.

6. The device according to claim 5, wherein the inscription of the rig of cameras comprises a list of intrinsic and extrinsic parameters of each camera of the rig of cameras.

7. The device according to claim 5, wherein the inscription of the rig of cameras comprises a list of extrinsic parameters of each camera of the rig of cameras and intrinsic parameters appliable to every camera.

8. The device according to claim 5, wherein the inscription of the rig of cameras comprises a compact representation of the capture of the 3D scene, the representation comprising a template shape.
